# FASCICULE DE BREVET EUROPEEN

(11) **EP 2 320 331 B1**
(45) Date de publication et mention de la délivrance du brevet: **12.12.2012**
(21) Numéro de dépôt: 10354066.2
(22) Date de dépôt: 20.10.2010
(51) Int. Cl.: G06F 15/80, G06F 15/78

(54) **Briques de construction de réseau sur puce**
Bausteine eines Netzes auf einem Chip
Bricks for building a network on a chip

(30) Priorité: 28.10.2009 FR 0905184
(43) Date de publication de la demande: 11.05.2011
(73) Titulaire: Kalray, 91400 Orsay (FR)
(72) Inventeur: Jacquet, François, 38190 Froges (FR)
(74) Mandataire: de Jong, Jean Jacques

(56) Documents cités:
- YUANFANG HU ET AL: "Physical Synthesis of Energy-Efficient Networks-on-Chip Through Topology Exploration and Wire Style Optimizationz", COMPUTER DESIGN, 2005. PROCEEDINGS. 2005 INTERNATIONAL CONFERENCE ON SAN JOSE, CA, USA 02-05 OCT. 2005, PISCATAWAY, NJ, USA,IEEE, 2 octobre 2005 (2005-10-02), pages 111-118, XP010846363, ISBN: 978-0-7695-2451-1
- DALLY WILLIAM J ET AL: "The Torus Routing Chip", IP.COM JOURNAL, IP.COM INC., WEST HENRIETTA, NY, US, 28 mars 2007 (2007-03-28), XP013118813, ISSN: 1533-0001

## Description

### Domaine technique de l'invention

L'invention concerne la conception d'un réseau sur puce (« Network on Chip » ou NoC) comprenant une matrice d'éléments de traitement, et plus particulièrement une structure de base, ou brique, permettant de concevoir rapidement un réseau de taille quelconque.

### État de la technique

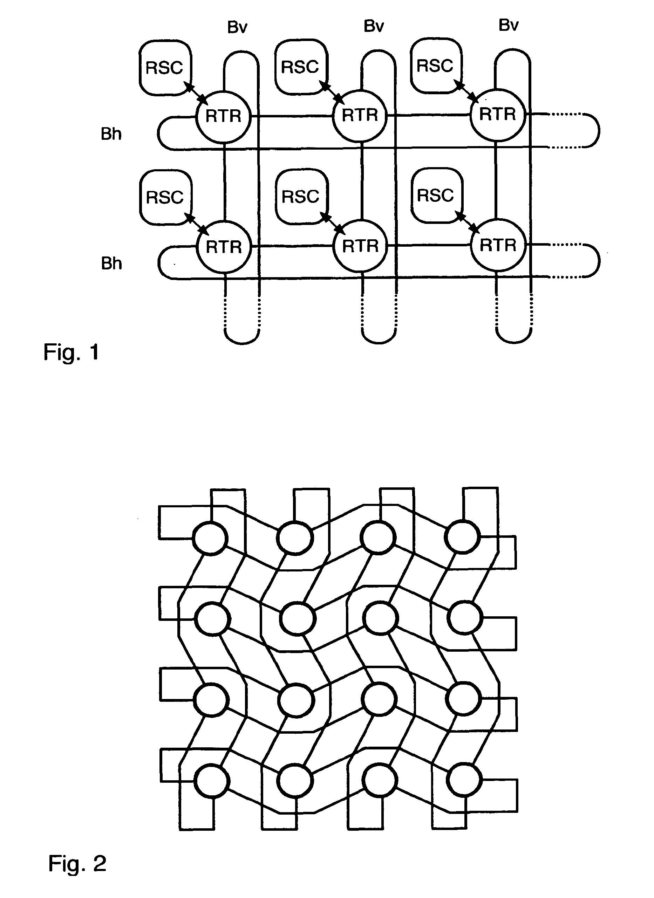

La figure 1 représente un exemple de réseau sur puce de topologie matricielle (ou maillée), tel que décrit dans le brevet Européen EP1701274.

Ce réseau comprend une pluralité de bus disposés en rangées (bus horizontaux Bh) et en colonnes (bus verticaux Bv). A chaque intersection entre un bus horizontal et un bus vertical est disposé un routeur RTR permettant de faire une connexion point à point entre chaque segment de bus (horizontal et vertical) qui lui arrive. En outre, chaque routeur RTR est relié à une ressource locale RSC, telle qu'une grappe de processeurs, qui peut être productrice ou consommatrice de données.

Ce genre de réseau est destiné à faire communiquer n'importe quelle ressource RSC avec n'importe quelle autre ressource. Une communication peut emprunter plusieurs routeurs qui se chargent d'acheminer les données vers la destination finale.

Pour limiter le nombre de noeuds que peut emprunter une communication, le réseau est de préférence torique. Comme cela est représenté, les routeurs se trouvant sur un bord de la matrice sont rebouclés sur les routeurs se trouvant au bord opposé de la matrice. En outre, cela permet d'utiliser la même structure de routeur, au bord comme au centre.

La figure 2 représente un réseau matriciel torique dans lequel les longueurs des liaisons entre noeuds sont optimisées. La matrice est de dimension 4x4, à titre d'exemple.

On a représenté par un cercle en trait gras, que l'on dénommera ci-après « élément de traitement », chaque ressource associée à son routeur. Les éléments de traitement sont reliés de manière entrelacée par rangées et colonnes, c'est-à-dire qu'un élément de rang n, dans une colonne ou une rangée, est relié à un élément de rang n+2 (les éléments périphériques échappant à cette règle pour l'une de leurs liaisons).

Avec cette configuration, toutes les liaisons entre éléments ont une longueur de même ordre.

Un réseau du type de la figure 2 peut comporter un nombre considérable d'interconnexions physiques qu'il faut placer sur le schéma d'implantation du circuit intégré. Les bus servant à échanger les données peuvent atteindre une largeur de l'ordre de 1024 conducteurs.

Par ailleurs, on souhaite offrir une gamme de circuits avec des tailles différentes de matrice, adaptée à une gamme d'applications différentes. En d'autres termes, on souhaite que le travail de routage et placement effectué pour une taille de matrice donnée puisse être réutilisé pour des matrices de tailles différentes.

Une procédure classique pour placer les interconnexions dans un circuit matriciel régulier est de prévoir des canaux de routage des interconnexions entre les cellules de la matrice, tandis qu'un nombre limité de conducteurs sont routés au-dessus des cellules, notamment les lignes d'alimentation en utilisant les niveaux de métallisation supérieurs.

Afin de ne pas refaire un travail de routage personnalisé pour chaque taille de matrice, on laisse le soin au logiciel de conception de router les interconnexions de façon automatique dans ces canaux de routage. Les canaux de routage doivent être surdimensionnés par rapport à la densité d'interconnexion, afin que le logiciel parvienne à router toutes les interconnexions avec une intervention manuelle minimale.

Cette procédure requiert une surface silicium notable pour les canaux de routage. En outre, même si le routage des interconnexions peut être assuré de manière automatique, le temps de routage peut être significatif et nécessiter des vérifications et des optimisations manuelles.

En outre, la publication titrée "Physical synthesis of energy-efficient networks-on-chip through topology exploration and wire style optimization" de Y. Hu et al dévoile à la figure 1 un réseau sur puce comprenant une matrice torique d'éléments de traitement formée par une juxtaposition de briques en rangées et colonnes conformément au préambule de la revendication 1 de la présente demande.

### Résumé de l'invention

On souhaite ainsi prévoir une solution réutilisable sans investissement de temps pour réaliser les interconnexions entre éléments de traitement d'un réseau sur puce matriciel, quelle que soit la taille de la matrice.

On souhaite en outre que cette procédure ne requière pas une augmentation significative de la surface silicium.

Pour satisfaire ces besoins, on prévoit un réseau sur puce comprenant une matrice torique d'éléments de traitement, la matrice étant formée par une juxtaposition de briques identiques intégrant chacune un élément de traitement et des segments de bus d'interconnexion et d'alimentation de la matrice. Les briques sont orientées à 180° de l'une à la suivante dans le sens des colonnes et dans le sens des rangées.

Chaque brique comprend un segment de bus longitudinal d'extra-connexion reliant deux bornes situées sur des bords opposés transversaux de la brique sur un premier axe ; et deux segments de bus longitudinaux d'intra-connexion reliant des circuits de la brique à des bornes respectives situées sur les bords opposés transversaux sur un deuxième axe symétrique au premier axe par rapport au centre de la brique. La brique comprend par ailleurs un segment de bus transversal d'extra-connexion reliant deux bornes situées sur des bords opposés longitudinaux de la brique sur un troisième axe ; et deux segments de bus transversaux d'intra-connexion reliant des circuits de la brique à des bornes respectives situées sur les bords opposés longitudinaux sur un quatrième axe symétrique au troisième axe par rapport au centre de la brique.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
- la figure 1 représente schématiquement un réseau sur puce classique de topologie torique ;
- la figure 2 représente un agencement optimisé de réseau sur puce torique ;
- la figure 3 représente de manière schématique un mode de réalisation de schéma d'implantation d'une brique de base intégrant un élément de traitement d'un réseau sur puce matriciel torique ;
- la figure 4 représente un exemple d'implantation de réseau sur puce matriciel réalisé à partir de briques du type de la figure 3 ; et
- la figure 5 représente un exemple de placement de lignes d'alimentation sur une brique du type de la figure 3.

### Description d'un mode de réalisation préféré de l'invention

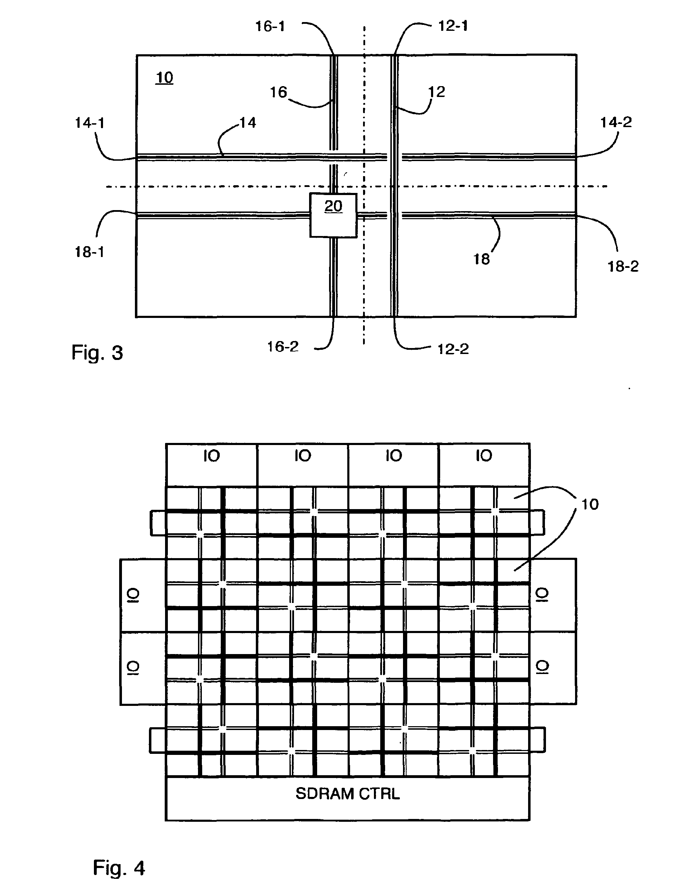

La figure 3 illustre un mode de réalisation de schéma d'implantation d'un élément de traitement de réseau matriciel, sous la forme d'une brique de base 10. Cette brique de base est similaire pour tout élément de traitement de la matrice du réseau. Outre les circuits (non représentés) destinés à réaliser les fonctions de traitement et d'acheminement de données de l'élément, la brique intègre un ensemble de segments conducteurs formant des interconnexions partielles, servant à réaliser toutes les interconnexions entre éléments adjacents par simple juxtaposition et rotation des briques.

Plus précisément, la brique 10, de forme rectangulaire, comporte un jeu de segments conducteurs transversaux 12 reliant des bornes 12-1 et 12-2 situées sur les bords longitudinaux opposés de la brique. Un jeu de segments conducteurs longitudinaux 14 relie des bornes 14-1 et 14-2 situées sur les bords transversaux opposés de la brique.

Les signaux à véhiculer par les jeux de segments conducteurs sont de préférence ceux qui doivent être échangés entre éléments de traitement, notamment les signaux des bus d'interconnexion. Ainsi, pour simplifier le langage ci-après, on parlera de « segments de bus » au lieu de « jeu de segments conducteurs ».

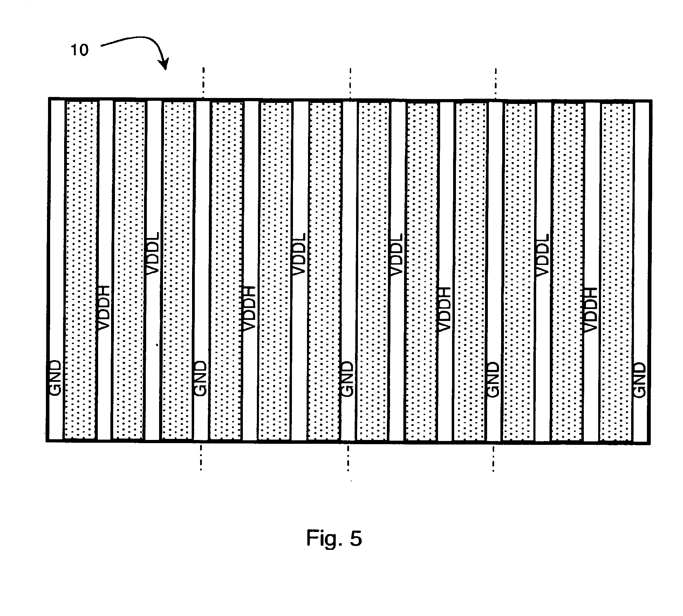

D'autres signaux moins nombreux, tels que des signaux d'horloge, de réinitialisation, et d'alimentation à fournir à l'ensemble des briques, pourront être véhiculés par des conducteurs interconnectés autrement. On décrira en relation avec la figure 5 un exemple avantageux de routage des lignes d'alimentation.

Les segments de bus 12 sont destinés à transmettre des signaux entre deux briques situées transversalement de part et d'autre de la brique représentée. Similairement, les segments de bus 14 sont destinés à transmettre des signaux entre deux briques situées longitudinalement de part et d'autre de la brique représentée. Ainsi, ces segments de bus, que l'on désignera par « segments de bus d'extra-connexion », ne véhiculent pas de signaux destinés à la brique elle-même, bien que la brique puisse être prévue pour les intercepter si on trouve à cela une quelconque utilité.

Par ailleurs, la brique comprend deux segments de bus que l'on désignera par « segments de bus d'intra-connexion », un segment transversal 16 et un segment longitudinal 18.

Le segment transversal 16 est interrompu. Il comprend deux demi-segments de bus reliant deux bornes 16-1 et 16-2 respectives des bords opposés longitudinaux de la brique à des circuits 20 respectifs distincts de la brique. Les circuits 20 forment notamment le routeur (RTR en figure 1) associé à l'élément de traitement de la brique. Similairement, le segment longitudinal 18 est interrompu et comprend deux demi-segments de bus reliant deux bornes 18-1 et 18-2 respectives des bords opposés transversaux de la brique à des circuits respectifs distincts du routeur 20.

Les segments de bus d'intra-connexion 16 et 18 sont destinés à transmettre à la brique elle-même des signaux provenant de l'extérieur, par l'intermédiaire de briques adjacentes.

Les bornes 12-1 à 18-2 sont agencées de manière à contacter par juxtaposition des bornes correspondantes de briques adjacentes, y compris lorsque ces briques sont orientées à 180° par rapport à la brique représentée. Ainsi, les bornes 12-1 et 12-2 sont sur un axe symétrique à un axe comportant les bornes 16-1 et 16-2, par rapport au centre de la brique. De même, les bornes 14-1 et 14-2 sont sur un axe symétrique à un axe comportant les bornes 18-1 et 18-2, par rapport au centre de la brique.

Comme cela est représenté, les axes des segments 12 et 14 sont parallèles, tout comme les axes des segments 16 et 18.

Selon une alternative (non représentée) satisfaisant également ces contraintes, les segments de bus ont des axes symétriques se croisant au centre de la brique. Cela implique que les segments transversaux 12 et 16 se croisent, et que les segments longitudinaux 14 et 18 se croisent. Cette alternative, bien qu'envisageable, n'est pas optimale, car on préfère limiter le nombre de croisements de conducteurs qui augmentent la complexité du routage.

La figure 4 représente un exemple de réseau sur puce comprenant une matrice 4x4 d'éléments de traitement réalisés à partir de briques du type de la figure 3. Dans chaque brique, on a représenté en trait gras les segments de bus d'extra-connexion 12 et 14, et en trait double les segments de bus d'intra-connexion 16 et 18.

Comme cela est représenté, les briques sont juxtaposées en rangées et colonnes. De préférence, deux briques adjacentes, que ce soit par colonne ou par rangée, sont orientées à 180° l'une par rapport à l'autre. Les segments de bus se trouvent interconnectés par les bords des briques de manière qu'une brique de rang n est connectée à une brique de rang n+2, par-dessus la brique de rang n+1. On retrouve ainsi la configuration torique entrelacée de la figure 2.

Si les briques étaient toutes disposées avec la même orientation, on retrouverait la configuration torique, mais non-entrelacée, de la figure 1.

A titre d'exemple, dans la première et la dernière rangée de la matrice, les bornes situées sur les bords de la matrice sont rebouclées, de sorte qu'une brique du bord se trouve connectée à la brique adjacente et à la brique un pas plus loin, en conformité stricte avec la structure de la figure 2.

D'autres briques du bord de la matrice pourront être reliées à des éléments périphériques, tels que des circuits d'entrée/sortie IO ou un circuit d'interface mémoire SDRAM CTRL. Chacun de ces éléments périphériques est configuré pour assurer la continuité du tore, horizontalement ou verticalement. Ainsi, chaque élément périphérique est relié aux deux segments de bus 12, 16 ou 14, 18 d'une brique du bord de la matrice et comporte un routeur permettant d'aiguiller des données entre chacun des deux segments de bus et l'élément périphérique lui-même.

Avec le mode de réalisation alternatif des briques, évoqué plus haut, où les segments de bus d'extra-connexion et d'intra-connexion se croisent, on obtiendrait une matrice torique entrelacée conforme à la figure 2 en utilisant des briques juxtaposées ayant toutes la même orientation.

La figure 5 représente un exemple avantageux de placement de segments de ligne d'alimentation sur une brique du type de la figure 3, permettant un routage des lignes d'alimentation de l'ensemble de la matrice par simple juxtaposition des briques. Ce placement des segments d'alimentation permet notamment à des briques adjacentes d'être orientées à 180° l'une par rapport à l'autre.

Dans l'exemple représenté, on veut fournir un potentiel de masse GND et deux potentiels d'alimentation VDDL et VDDH.

Pour chaque potentiel, on prévoit un nombre pair de segments conducteurs à axes parallèles reliant deux bords opposés de la brique. Les segments sont disposés symétriquement par rapport à un axe de symétrie de la brique, ici l'axe de symétrie vertical. De préférence, comme cela est représenté, les segments associés aux différents potentiels sont entrelacés et répartis uniformément sur la brique. On peut prévoir au centre de la brique un segment supplémentaire pour l'un des potentiels d'alimentation, ici le potentiel de masse GND.

Avec cette configuration, les segments d'alimentation s'interconnectent pour former les lignes d'alimentation de la matrice par simple juxtaposition des briques dans l'axe des segments. En outre, les lignes d'alimentation sont formées de la même manière indépendamment des orientations individuelles à 0° ou 180° des briques.

Il reste à traiter le sort d'autres signaux à fournir à l'ensemble des éléments de traitement, tels que l'horloge et la remise à zéro. Ces signaux étant en faible nombre, et ne nécessitant pas des conducteurs de section importante, ils pourront être routés par-dessus les briques de manière automatisée. Pour que le logiciel de routage ne soit pas induit en erreur par les orientations des briques, chaque brique pourra être munie de deux bornes pour chaque signal, ces deux bornes étant disposées symétriquement par rapport au centre de la brique.

## Revendications

1. Réseau sur puce comprenant une matrice torique d'éléments de traitement formée par une juxtaposition de briques (10) en rangées et colonnes, chaque brique comprenant :
- un segment de bus longitudinal d'extra-connexion (14) reliant deux bornes (14-1, 14-2) situées sur des bords opposés transversaux de la brique sur un premier axe ;
- deux segments de bus longitudinaux d'intra-connexion (18) reliant des circuits (20) de la brique à des bornes respectives (18-1, 18-2) situées sur les bords opposés transversaux sur un deuxième axe symétrique au premier axe par rapport au centre de la brique ;
- un segment de bus transversal d'extra-connexion (12) reliant deux bornes (12-1, 12-2) situées sur des bords opposés longitudinaux de la brique sur un troisième axe ; et
- deux segments de bus transversaux d'intra-connexion (16) reliant des circuits (20) de la brique à des bornes respectives (16-1, 16-2) situées sur les bords opposés longitudinaux sur un quatrième axe symétrique au troisième axe par rapport au centre de la brique ;
**caractérisé en ce que** :
- les briques sont orientées à 180° de l'une à la suivante dans le sens des colonnes et dans le sens des rangées, et
- chaque brique comprend un nombre pair de segments de conducteurs d'alimentation disposés symétriquement par rapport à un axe de symétrie de la brique et reliant des bords opposés de la brique.

2. Réseau sur puce selon la revendication 1, dans lequel les segments de bus d'extra-connexion (12, 14) de chaque brique ne sont pas connectés à des circuits de la brique.

3. Réseau sur puce selon la revendication 1, dans lequel les axes symétriques par rapport au centre de la brique sont parallèles.

## Claims

1. Network on chip comprising a torus matrix of processing elements formed by a juxtaposition of bricks (10) in rows and columns, each brick comprising:
• a longitudinal extra-connection bus segment (14) connecting two terminals (14-1, 14-2) situated on opposite transverse edges of the brick on a first axis;
• two longitudinal intra-connection bus segments (18) connecting circuits (20) of the brick to respective terminals (18-1, 18-2) situated on the opposite transverse edges on a second axis symmetrical to the first axis with respect to the center of the brick;
• a transverse extra-connection bus segment (12) connecting two terminals (12-1, 12-2) situated on opposite longitudinal edges of the brick on a third axis; and
• two transverse intra-connection bus segments (16) connecting circuits (20) of the brick to respective terminals (16-1, 16-2) situated on the opposite longitudinal edges on a fourth axis symmetrical to the third axis with respect to the center of the brick;
**characterized in that**:
• the bricks are oriented at 180° from one to the next in the direction of the columns and in the direction of the rows, and
• each brick comprises an even number of power supply conductor segments arranged symmetrically with respect to an axis of symmetry of the brick and connecting opposite edges of the brick.

2. Network on chip according to claim 1, wherein the extra-connection bus segments (12, 14) of each brick are not connected to circuits of the brick.

3. Network on chip according to claim 1, wherein the symmetrical axes with respect to the center of the brick are parallel.

## Patentansprüche

1. Netzwerk auf einem Chip, das eine torische Matrix von Elementen enthält, die durch eine Nebeneinanderanordnung von Bausteinen (10) in Zeilen und Spalten geformt wird, wobei jeder Baustein Folgendes enthält:
- ein Segment eines Außenverbindungs-Längsbusses (14), das zwei Anschlüsse (14-1, 14-2) verbindet, die sich auf gegenüberliegenden Querrändern des Bausteins auf einer ersten Achse befinden;
- zwei Segmente von Innnenverbindungs-Längsbussen (18), die Schaltungen (20) des Bausteins mit jeweiligen Anschlüssen (18-1, 18-2) verbinden, die sich auf den gegenüberliegenden Querrändern auf einer zweiten Achse symmetrisch zur ersten Achse bezüglich der Mitte des Bausteins befinden;
- ein Segment eines Außenverbindungs-Querbusses (12), das z w ei Anschlüsse (12-1, 12-2) verbindet, die sich auf gegenüberliegenden Längsrändern des Bausteins auf einer dritten Achse befinden; und
- zwei Segmente von Innenverbindungs-Querbussen (16), die Schaltungen (20) des Bausteins mit jeweiligen Anschlüssen (16-1, 16-2) verbinden, die sich auf den gegenüberliegenden Längsrändern auf einer vierten Achse symmetrisch zur dritten Achse bezüglich der Mitte des Bausteins befinden;
**dadurch gekennzeichnet, dass**:
- die Bausteine um 180° von einem zum anderen in Richtung der Spalten und in Richtung der Zeilen ausgerichtet sind, und
- jeder Baustein eine gerade Anzahl von Segmenten von Versorgungsleitern enthält, die symmetrisch bezüglich einer Symmetrieachse des Bausteins angeordnet sind und gegenüberliegende Ränder des Bausteins verbinden.

2. Netzwerk auf Chip nach Anspruch 1, bei dem die Segmente eines Außenverbindungs-Busses (12, 14) jedes Bausteins nicht mit Schaltungen des Bausteins verbunden sind.

3. Netzwerk auf Chip nach Anspruch 1, bei dem die bezüglich der Mitte des Bausteins symmetrischen Achsen parallel sind.
